# EUROPEAN PATENT APPLICATION

(11) **EP 0 896 161 A2**
(43) Date of publication of application: **10.02.1999**
(21) Application number: 98202604.9
(22) Date of filing: 01.08.1998
(51) Int. Cl.: F16B 39/282, F16L 19/00

(54) **Union nut with external surface having radial toothing**

(30) Priority: 08.08.1997 IT MI971918; 08.08.1997 IT MI970605 U
(71) Applicant: CAZZANIGA S.p.A., Milano (IT)
(72) Inventor: Peroni, Andrea, 20046 Biassono (Milano) (IT)
(74) Representative: Raimondi, Alfredo, Dott. Ing. Prof.

(57) **Abstract**

Nut on the external surface of which at least one radial toothing (2) designed for tightening unions (1) for the sealed connection of pipes to threaded connections is provided.

## Description

The present invention relates to a nut which is provided on the external surface of its body with at least one radial toothing for tightening on unions for the sealed connection of pipes and the like to threaded connections.

It is known in the technical sector relating to the connection of pipes to threaded connections of hydraulic, pneumatic and similar equipment that there exists the need to screw onto the threading of the said connection the locking nut of the union which provides the sealed connection between the two parts.

It is also known that tightening of the nut of the union cannot be performed by means of power-driven tightening tools, of the screwing and similar type, since access to the nut with the tool is possible only in a radial direction and not in the axial direction which is prevented by the presence of the pipe, on the one hand, and the threaded connection, on the other hand.

The technical problem which is posed, therefore, is that of providing a locking nut for connecting elements of parts to be joined together in frontal and/or perpendicular directions such as, for example, those of the unions for the sealed connection of pipes to threaded connections of hydraulic, pneumatic and similar equipment, which allows joining together in the radial direction also using power tools, of the screwing type, so as to allow tightening/loosening thereof to be performed by means of said automatic tools.

Within the scope of this problem a further requirement is that the nut should be easy and inexpensive to manufacture using the traditional production techniques and that it should not have overall dimensions which are substantially different from those of conventional nuts.

A further object of the present patent is that of providing a union for the connection of smooth pipes to threaded connection elements of hydraulic, pneumatic and similar plants, which is both suitable for achieving a perfect seal and simultaneous mechanical retention of the pipe so as to prevent the extraction thereof and which at the same is suitable for being tightened by means of power tools of the screwing type, so as to ensure easy and fast locking of the union.

These technical problems are solved according to the present invention by a nut which is provided on the external surface of its body with at least one radial toothing and by a union, the tightening element of which consists of a nut with external radial toothing.

Further details may be obtained from the following description of a non-limiting example of embodiment of the invention provided with reference to the accompanying drawings in which:
Figures 1a and 1b show a side view and a front view, respectively, of a first example of embodiment of the nut according to the invention;
Figures 2a and 2b show a side view and a front view, respectively, of a second example of embodiment of the nut;
Figures 3a and 3b show a side view and a front view, respectively, of a third example of embodiment of the nut;
Figure 4 shows a partially sectioned view of a first embodiment of the union according to the present invention;
Figure 5 shows a partially sectioned view of a second example of embodiment of the union according to the present invention; and
Figure 6 shows a third embodiment of the union according to the present invention.

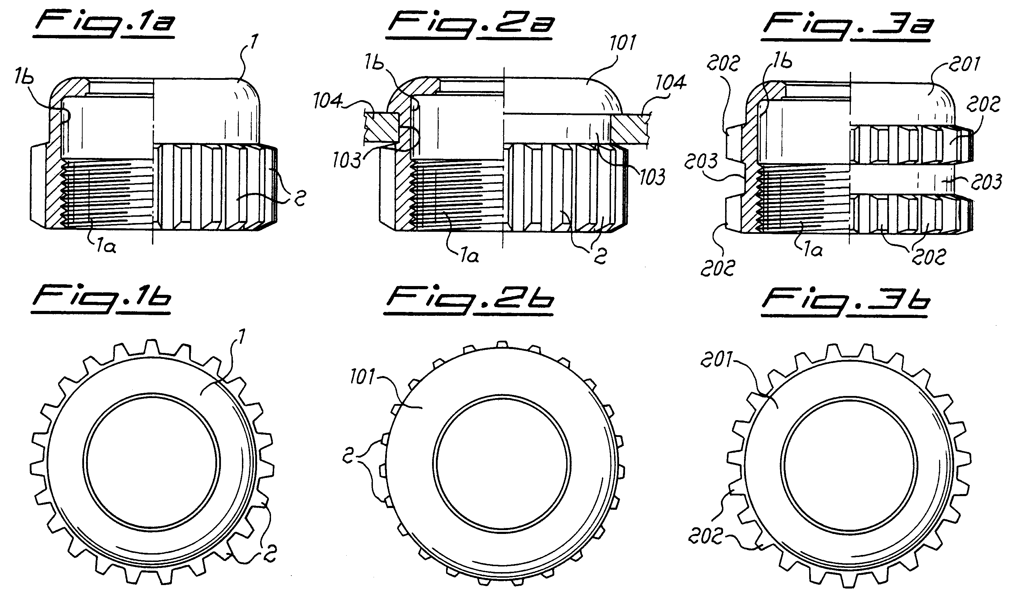

As illustrated in Figs. 1a and 1b, a nut according to the invention comprises an internally hollow body 1 having, formed inside it, a thread 1a extending over a certain portion of the axial height of the nut itself.

The interruption in the thread results in an annular seat 1b which is designed to contain sealing elements of multiple-part unions which are known per se and do not fall within scope of the present patent.

The external surface of the nut is provided with a toothing 2 of suitable dimensions which is designed for engagement with a corresponding toothing of a special tool forming the subject of a separate patent application in the name of the same proprietor.

The characteristic features of the toothing are not described in detail, it being understood that its specific constructional form may be adapted by the person skilled in the art in relation to the specific requirements imposed by the particular conditions of use.

Figs. 2a and 2b illustrate further embodiments of the nut according to the invention; as can be seen, the nut 101 has, in addition to the toothing 2, an annular seat 103 suitable for engagement with corresponding means, only schematically illustrated at 104, of the tightening tool not shown.

This seat allows the said tightening tool to be engaged so that the rotation of the nut about its longitudinal axis involves a corresponding displacement of the tool in the axial direction, the latter thus being able to operate always with constant characteristics also during movement of the nut in the axial direction due to its screwing/unscrewing on the thread of the fixed connection.

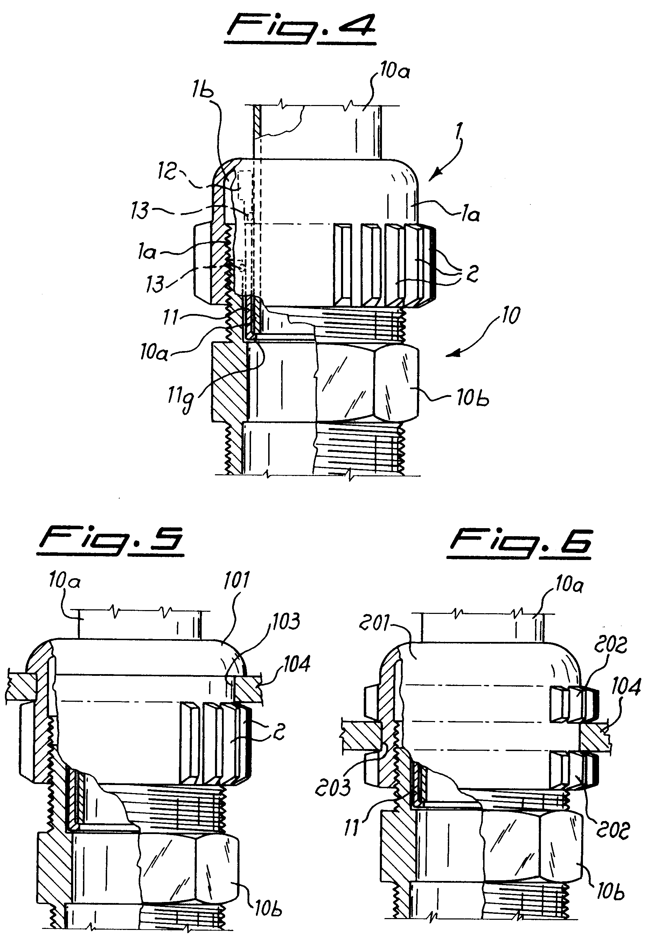

The embodiment according to Figs. 3a,3b also has similar characteristics although in this case the nut 201 has a double toothing 202 which is interrupted in the axial direction by a circumferential seat 203 suitable for engagement with the aforementioned means 104 of the screwing device, so as to cause displacement thereof in the axial direction during screwing/unscrewing.

As illustrated in Fig. 4, the union 10 for connection of a smooth pipe 10a to a threaded connection 10b essentially consists of a bush 11 guiding the pipe 10a, a nose piece 12 for retaining the pipe 10a, associated auxiliary sealing means of the O-ring type 13 or the like and a locking nut 1 according to the invention.

The inner end of the said guide 11 has a bent portion 11g directed towards the inside and forming an end-of-travel stop for insertion of the pipe 1.

Said guide bush 11 is normally suitable for axial coupling with the said nose piece 12 which is designed to co-operate with the pipe 10a so as to mechanically retain it in the axial direction.

Sealing means for example of the O-ring type 13 are arranged between the union and the threaded connection 10b and between the union and the pipe 10a.

The nut 1 for locking of the union (Fig. 4) is realized in accordance with that described above in relation to Fig. 1.

The interruption of the thread in the axial direction results in the formation of an annular seat 1b which is designed to contain, at least partially, the said means 12 for retaining the pipe.

Fig. 5 shows a further embodiment of the union in which the nut 101 has, in addition to the toothing 2, an annular seat 103 suitable for engagement with corresponding means, only schematically illustrated at 104, of the tightening tool (not shown).

This seat allows engagement of the said tightening tool so that rotation of the nut about its longitudinal axis involves a corresponding displacement, in the axial direction, of the tool which is thus able to operate with constant characteristics also during movement, in the axial direction, of the nut due to screwing/unscrewing thereof on the threading of the fixed connection.

The embodiment according to Fig. 6 also has similar features; in this case, however, the nut 201 has a double toothing 202 which is interrupted in the axial direction by a circumferential seat 203 suitable for engagement with the aforementioned means 104 of the screwing device so as to cause the displacement thereof, in the axial direction, during screwing, in accordance with that described with reference to Fig. 3a.

It is therefore obvious how the nut according to the invention allows a perfect and functional engagement in the radial direction with a screwing tool, operation of which allows screwing/unscrewing of the nut also in the case of frontal and/or perpendicular connection of parts which prevent the use of said power tools, frontal access to the nut not being permitted.

In addition to this, the use of the nut according to the invention also allows rapid and reliable tightening by means of said screwing devices which may be calibrated so as to provide a predetermined tightening torque which provides the desired connection, but without causing damage to the individual parts of the union, damage which has particularly serious effects in the case, for example, of hydraulic type unions in which an even minimum deformation of a component may be the cause of leakages from the union.

## Claims

1. Nut for hydraulic, pneumatic and similar unions, characterized in that the external surface of its body (1;101;201) is provided with at least one radial toothing (2;202).

2. Nut according to Claim 1, characterized in that the external surface of its body (101) has, formed in it, a circumferential seat (103) suitable for engagement with corresponding fastening means (104) of a tightening tool.

3. Nut according to Claim 1, characterized in that two sets of radial, parallel and coaxial toothing (202) are formed on its external surface (201).

4. Nut according to Claims 1 and 3, characterized in that said sets of toothing (202) define in the axial direction a circumferential seat (203) suitable for engagement with said means (104) of the tightening tool.

5. Nut according to Claim 1, characterized in that it has an internal annular seat (1b).

6. Union for the sealed connection of pipes (10a) to threaded connections (10b) of hydraulic equipment and the like, comprising means (13) for sealing, means (12) for mechanically retaining the pipe in the axial direction and at least one locking element (1;101;201) with a female thread (1a) for locking the union on said threaded connection (10b), characterized in that said locking element (1;101;201) has at least one radial toothing (2;202) on its external surface.

7. Union according to Claim 6, characterized in that the external surface of the locking element (102) has, formed in it, a circumferential seat (103) suitable for engagement with corresponding fastening means (104) of a screwing/unscrewing tool.

8. Union according to Claim 6, characterized in that two sets of radial, parallel and coaxial teeth (201) are formed on the external surface of the locking element (202).

9. Union according to Claims 6 and 8, characterized in that said sets of teeth (202) define in the axial direction a circumferential seat (203) suitable for engagement with said means (104) of the tightening tool.

10. Union according to Claim 6, characterized in that said locking element (1;101;201) has an internal annular seat (1b) for containing at least partially the said pipe retaining and sealing means.
